# EUROPEAN PATENT APPLICATION

(11) **EP 4 099 304 A1**
(43) Date of publication of application: **07.12.2022**
(21) Application number: 21382502.9
(22) Date of filing: 04.06.2021
(51) Int. Cl.: G09B 5/00, G06F 9/451, G09B 5/06

(54) **CUSTOMIZED LABORATORY TRAINING BASED ON USER ROLE AND LABORATORY CONFIGURATION**

(71) Applicant: F. Hoffmann-La Roche AG, 4070 Basel (CH); Roche Diagnostics GmbH, 68305 Mannheim (DE)
(72) Inventor: PÉREZ PÉREZ, José Carlos, 08174 San Cugat del Vallés - Barcelona (ES); IBRAHIM, Yasser Mohamed Reda Abdelgawad, 08174 San Cugat del Vallés - Barcelona (ES); DE MAGALHAES, Chloe, 08174 San Cugat del Vallés - Barcelona (ES)
(74) Representative: Herren, Barbara

(57) **Abstract**

A method of automatically customizing user training on a laboratory system is presented. The method comprises retrieving a configuration file of the laboratory system, logging into the laboratory system by a laboratory user, identifying and authenticating the laboratory user for use and training on the laboratory system, after the laboratory user is identified and authenticated by the laboratory system, retrieving training credentials required for that laboratory user for the laboratory system based on a user profile of the laboratory user, and based on the training credentials of the laboratory user, automatically assigning training material required for the laboratory user to use the laboratory system based on the training credentials of the laboratory user and the configuration file of the laboratory system and loading the assigned training material onto the laboratory system for completion by the laboratory user.

## Description

### Technical Field

The present disclosure generally relates to automatically customizing user training on a laboratory system.

### Background

Training users in a laboratory how to use a new laboratory product and its associated software or a new version of a laboratory product/software can be expensive, as it can typically require mobilizing laboratory users to a central training facility of the laboratory product/software provider. This mobilization typically involves travel and administrative costs and may be logistically difficult to have all the laboratory users come to the same central site for training.

Furthermore, the current training formats normally do not offer options to customize the user training of that product/software according to the specific laboratory tasks of a laboratory user or according to the configuration of the laboratory product(s) that has been selected for that particular laboratory.

Because of the large number of different laboratory roles a laboratory user may possibly have in a laboratory, the cost of the training for all the different laboratory roles can be high and costly. Additionally, laboratory users that attended traditional training may be exposed to training content that does not apply to the specific laboratory role that the laboratory user has in the laboratory. This could result in confusion of the training content needed or the training content being less appealing to the laboratory user, which makes the training less valuable to the laboratory user.

Document WO 2011/017608 A1 discloses methods and systems adapted to provide a single-source, e-training platform for generating an e-training plan and providing competencies in the operation, maintenance, calibration, control testing, and/or troubleshooting of an instrument or piece of equipment. In this document, an administrator module is disclosed and adapted to generate an invite to a trainee and allows generation of an e-learning plan for a trainee.

Document EP 1629451 A2 discloses a method for use in training individuals including providing a standardized training program and worker specific training information. In this document, the worker specific training information includes information corresponding to each of a plurality of different training objects for at least one workplace condition. One or more administrative individuals are allowed to provide workplace information associated with a workplace.

Document EP 3545409 A1 discloses a method to determine, based on at least in part on the contextual information, content to include in at least one graphic user interface of a plurality of template graphical user interfaces for an on-boarding tutorial of the application.

Document US 2007/0099161 A1 discloses systems, methods, and software for dynamically creating and managing electronic learning courses. In this document, the method facilitates the learning management system to improve the quality of training and reduces cost by reducing the travel and administrative costs associated with classroom training while delivering a consistent learning offering. The method provides the learning management system that is fully integrated with enterprise resource planning (ERP) solution.

Document US 2002/0086267 A1 discloses an apparatus for the automatic determination of an individually adapted, non-prefabricated training unit based on the individual learning need of the trainee, by storing all training modules with their dependencies on one other in a data bank and wherein the selection device for generating the training unit from the existing training modules is fashioned such that dependencies of training units on one another are taken into consideration. In this document, the training participant specifies his or her learning need, for example on the basis of certain key words.

### Summary

It is an object of the present disclosure to provide a method for automatically customizing user training on a laboratory system, which can be cost-effective, efficient, and allows for ease of use.

For solving the problem, a method for automatically customizing user training on a laboratory system according to the independent claim 1 is provided. Additional embodiments are referred to in the dependent claims.

According to a first aspect of the present disclosure, a method of automatically customizing user training on a laboratory system is presented. The method comprises retrieving a configuration file of the laboratory system, logging into the laboratory system by a laboratory user, identifying and authenticating the laboratory user for use and training on the laboratory system, after the laboratory user is identified and authenticated by the laboratory system, retrieving training credentials required for that laboratory user for the laboratory system based on a user profile of the laboratory user, and based on the training credentials of the laboratory user, automatically assigning training material required for the laboratory user to use the laboratory system based on the training credentials of the laboratory user and the configuration file of the laboratory system and loading the assigned training material onto the laboratory system for completion by the laboratory user.

The assigning of the user training is determined by first filtering all of training material based on training credentials of the laboratory user for a particular configuration of the laboratory and, after the first filtering, performing a second filtering based on the laboratory role of the laboratory user as found in the user profile.

The laboratory user has a plurality of profiles comprising at least one laboratory role within each profile of the plurality of profiles.

The configuration file is comprised of a Masterfile of the laboratory system and a laboratory provider's configuration file developed by the laboratory system's provider, which is correlated to the Masterfile. In one embodiment, the provider may be the manufacturer of the laboratory product(s)/software in the laboratory system. In another embodiment, the provider may be a re-seller of laboratory product(s)/software in the laboratory system. In yet another embodiment, the provider may be a combination of a manufacturer and re-seller of laboratory product(s)/software in the laboratory system.

In one embodiment, the configuration file can comprise the modalities that have been configured for the laboratory system. The configuration file can also comprise the modalities available for use by the laboratory user.

In one embodiment, the assigned training material presented to the laboratory user can also be based on behavior of similar laboratory users within the laboratory system. The similar laboratory users may have the same or similar user roles in the laboratory.

In one embodiment, the assigned training material presented to the laboratory user can be based on behavior of similar laboratory users in a laboratory system, which has the same or similar laboratory configuration.

In one embodiment, the training credentials are related to user role of the laboratory user in the laboratory system. The user role can be correlated to a plurality of training materials associated with the training credentials.

In one embodiment, the training credentials are related to laboratory tasks to be performed by the laboratory user in the laboratory system.

The method can further comprise predefining customized training displays based on the laboratory user profile and laboratory user role in the laboratory system.

The method can further comprise feeding the laboratory system with laboratory system configuration files from a provider of laboratory product(s)/software of the laboratory system. In one embodiment, the feeding may be installing the laboratory system configuration files on a database connected to the laboratory system by the provider of laboratory product(s)/software. In another embodiment, the provider of laboratory product(s)/software may directly install the laboratory system configuration files into the laboratory system.

The method can further comprise restricting or denying access to the laboratory system to the laboratory user until all of the laboratory user assigned training material has been completed by the laboratory user.

The method can further comprise notifying the laboratory user when new training material has been updated and that the laboratory user needs complete the new updated training material.

### Brief Description of the Several Views of the Drawings

The following detailed description of specific embodiments of the present disclosure can be best understood when read in conjunction with the following drawings, where like structure is indicated with like reference numerals and in which:
Fig. 1 illustrates a laboratory system according to an embodiment of the present disclosure.
Fig. 2 illustrates an example of a Masterfile provided by the provider service representative to the customer to collect the relevant information according to an embodiment of the present disclosure.
Fig. 3 illustrates the filtering process to determine the customized required training material according to an embodiment of the present disclosure.
Fig. 4 illustrates a flowchart of the method of automatically customizing user training on a laboratory system according to an embodiment of the present disclosure.

### Detailed Description

In the following detailed description of the embodiments, reference is made to the accompanying drawings that form a part hereof, and in which are shown by way of illustration, and not by way of limitation, specific embodiments in which the disclosure may be practiced. It is to be understood that other embodiments may be utilized and that logical, mechanical and electrical changes may be made without departing from the spirit and scope of the present disclosure.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

The use of the 'a' or 'an' can be employed to describe elements and components of the embodiments herein. This is done merely for convenience and to give a general sense of the inventive concepts. This description should be read to include one or at least one and the singular includes the plural unless it is obvious that it is meant otherwise.

The term 'laboratory instrument' or "laboratory device" as used herein can encompass any apparatus or apparatus component operable to execute and/or cause the execution of one or more processing steps /workflow steps on one or more biological samples and/or one or more reagents. The expression 'processing steps' thereby can refer to physically executed processing steps such as centrifugation, aliquotation, sample analysis and the like. The term 'instrument' can cover pre-analytical instruments, post-analytical instruments, analytical instruments and laboratory middleware.

The term 'laboratory middleware' as used in the present description can refer to any physical or virtual processing device configurable to control a laboratory instrument or system comprising one or more laboratory instruments in a way that workflow(s) and workflow step(s) can be conducted by the laboratory instrument/system. The laboratory middleware may, for example, instruct the laboratory instrument/system to conduct pre-analytical, post analytical and analytical workflow(s)/ workflow step(s). The laboratory middleware may receive information from a data management unit regarding which steps need to be performed with a certain sample. In some embodiments, the laboratory middleware can be integral with a data management unit, can be comprised by a server computer and/or be part of one laboratory instrument or even distributed across multiple instruments of the laboratory system. The laboratory middleware may, for instance, be embodied as a programmable logic controller running a computer-readable program provided with instructions to perform operations.

A 'data storage unit' or 'database' can be a computing unit for storing and managing data such as a memory, hard disk or cloud storage. This may involve data relating to biological/medical sample(s) to be processed by the automated system. The data management unit may be connected to an LIS (laboratory information system) and/or an HIS (hospital information system). The data management unit can be a unit within or co-located with a laboratory instrument. It may be part of the laboratory middleware. Alternatively, the database may be a unit remotely located. For instance, it may be embodied in a computer connected via a communication network.

The term 'communication network' as used herein can encompass any type of wireless network, such as a WiFi^{™}, GSM^{™}, UMTS or other wireless digital network or a cable based network, such as Ethernet^{™} or the like. In particular, the communication network can implement the Internet protocol (IP). For example, the communication network can comprise a combination of cable-based and wireless networks.

The term 'remote system' or 'server' as used herein can encompass any physical machine or virtual machine having a physical or virtual processor, capable of receiving; processing and sending data. A server can run on any computer including dedicated computers, which individually can also often be referred to as 'the server' or shared resources such as virtual servers. In many cases, a computer can provide several services and have several servers running. Therefore, the term server may encompass any computerized device that shares a resource with one or more client processes. Furthermore, the terms 'remote system' or 'server' can encompass a data transmission and processing system distributed over a data network (such as a cloud environment).

An automated method of providing customizing laboratory user training content based on the specific configuration of each laboratory and of that particular laboratory user will use is presented. The training such as, for example, a virtual guided tour, is specifically build based on the configuration of the middleware for that particular laboratory and for each laboratory user role in that particular laboratory so that only those workflows or those training screens for that middleware product are shown which match the configuration of that laboratory user rather than showing the user information that is not customized to him/her and that does not apply to the laboratory user's role or laboratory configuration.

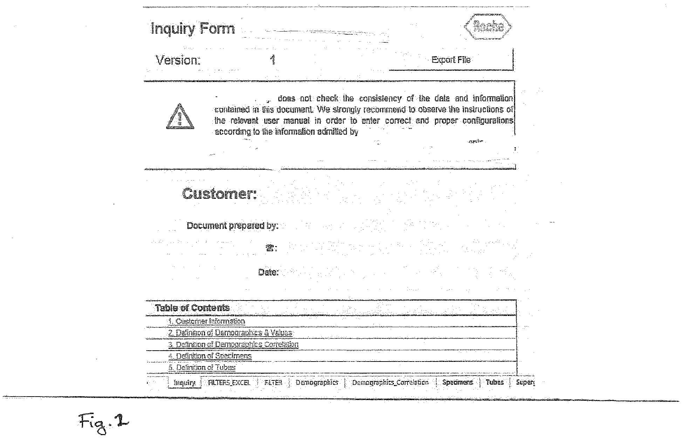

Thus, the customized user training content can be created automatically by providing the laboratory system with the laboratory configuration files, i.e., the Masterfile of the middleware (see Fig. 2 for an example of a Masterfile) and the complete configuration file provided by the service representative of the laboratory provider, for each customer setting.

This method provides an automatic way of producing customized training for the users in a laboratory setting, instead of the training content being provided by a remote global customer service group of the provider that may have to travel to the customer site or have the laboratory users travel to the site of the laboratory provider in order to insure the correct training content is being provided.

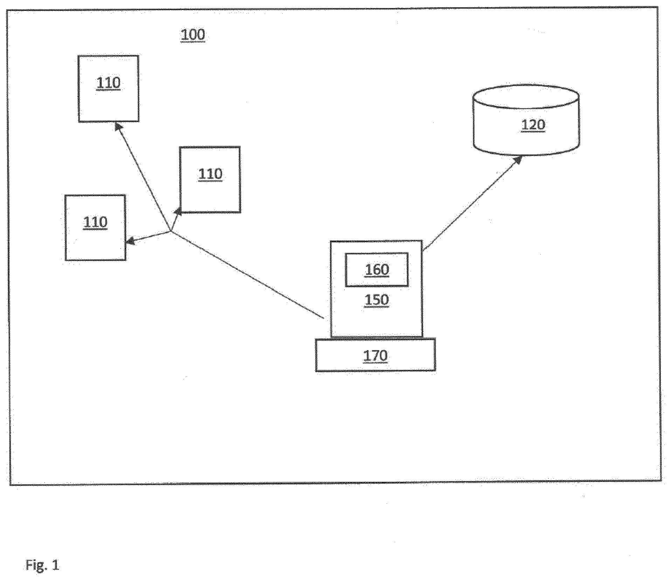

Typically, as shown in Fig. 1, a laboratory system 100 will comprise a plurality of laboratory instruments 110 such as, for example, laboratory analyzers. The laboratory system 100 may also have at least one training instrument 150 with a display 160, such as, for example, a graphic user interface (GUI), and a user input 170 such as, for example, a touchscreen, mouse, and/or keyboard that can be used for laboratory user training. A laboratory user will be able to have access to that display 160 and user input 170 in order to interact with the laboratory system 100. In one embodiment, the at least one training instrument 150 may be portable such as, for example, an iPad or lap top, or, in other embodiment, may be configured to be integrated into a laboratory instrument 110 of the laboratory system 100. The at least one training instrument 150 of the laboratory system 100 will be in communicative contact with a database 120. The database 120 can store the user profiles of all the laboratory users of the laboratory system 100 as well as the laboratory customer configuration files.

In one embodiment, upon the initial login of the laboratory user into the laboratory system 100 via, for example, the user input 170 of the at least one training instrument 150, the laboratory user's profile will be identified, recognized, and retrieved from the database 120 in order to create customized welcome messages and other information on the display 160 of the at least one training instrument 150 for that particular laboratory user. Then, based on the specific role of the laboratory user in the laboratory, as defined in the Masterfile (see, e.g., Fig. 2) and customer configuration file, the categories and associated display screens of the customer training that need to be completed by that laboratory user will be determined automatically and provided to the laboratory user via the display 160 of the at least one training instrument 150.

For example, based on the customer configuration files, the laboratory system 100 can recognize that for a particular user, e.g., Customer 1, the following training subcategories should be provided and displayed, Quality Control (QC) Admin, QC Review, and Manual Entry from the Quality Control (QC) module. Within each of these training subcategories, the laboratory system 100 can determine which training screens should be provided to the user based on his/her profile on the display.

In one embodiment, the configuration file stored in the database 120 can be a text file that contains the following information:
- How many laboratory users are defined in the laboratory system and what are the profiles for each laboratory user. Based on the user profiles, customized training for the laboratory system can be generated according to each user profile and assigned to the corresponding laboratory user. Therefore, the laboratory users' access rights can be predefined as to which screens on the display of the laboratory system that the laboratory user will have access to based on the profile of the laboratory user. It is these display screens that will form the basis of the customized training of the laboratory user for the laboratory system.
- Modalities active for that particular laboratory and the configuration associated with each laboratory. For example, if the Quality Control (QC) module is used in the laboratory, the laboratory user will be trained for QC. In another example, the laboratory system will determined which Work Area (WA) the laboratory user should be trained in based on WA type (i.e., by tube or by order) and the groups of tests appropriate for certain assays that the laboratory user may need to know based on the profile of the laboratory user. In another example, the sample workflow (WF) engine configuration will determine, which applicable WF-related training that the laboratory user needs to receive (e.g., sample tracking, archive query, and the like). Finally, if reports are enabled in the customer configuration, the laboratory user will, then, be trained in the applicable report and printing options.

For each software product resident in the laboratory system, there are customer training entities, or modules, that have been created for the laboratory users. These customer-training modules typically are created once, i.e., for each version release of the laboratory software product. For example, a typical middleware product may have approximately twenty customer training modules associated with it, such as, for example, Validation, Work Area (WA), Quality Control (QC), Instrument, Host Communication, Workflow (WF), Order Entry, User Management, and the like. However, not all these customer-training modules may be relevant or even pertinent for each laboratory user in the laboratory system.

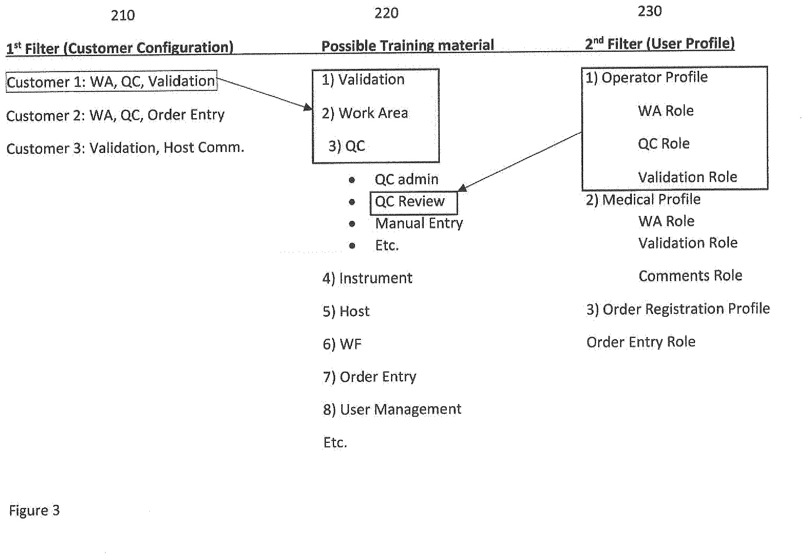

Therefore, how does the laboratory system decide what customer training each particular laboratory user needs? It is based on two levels of filtering, laboratory configuration of the customer and the laboratory role of the laboratory user as illustrated in Fig. 3. Fig. 3 illustrates the filtering process to determine the customized required customer training material.

Referring to Fig. 3, when deciding on the customer training for each laboratory user, the laboratory system first filters the customer training modules based on the customer laboratory configuration 210. Based on the information collected from the customer configuration files (i.e., the Masterfile and the laboratory configuration file populated by the laboratory provider service representative), the laboratory system can determine what modalities are available for that particular laboratory customer such as, for example, a diagnostic laboratory or a hospital. For example, in one embodiment, Customer 1 can be assigned the modalities - Work Area (WA), Quality Control (QC), and validation; Customer 2 can be assigned - WA, QC, and order entry; and Customer 3 can be assigned - validation and host communication.

Then, the customer training modules are filtered by user profile 230. The user profiles are also found in the customer configuration files. Each user profile can have several laboratory roles assigned to it. How many and which user roles are assigned can depend on the laboratory configuration for each particular customer. For example, in one laboratory, an operator profile may assume many user roles such as, for example, WA, QC, validation, and the like, whereas in another laboratory, an operator profile may only have WA and QC user roles.

Therefore, for example, as illustrated in column 230 of Fig. 3, at one customer laboratory, there could be the following laboratory user profiles:
- Operator profile: Work Area (WA) role, Quality Control (QC) role and Validation Role;
- Medical profile: WA Role, Validation Role, and Comments Role, and
- Order Registration profile: Order Entry Role

The definitions for the laboratory user roles can be standard for each laboratory software product. For example, an Administrative Role in a middleware product will have a standard definition of what is accessible in the terms of display screens, functionality, and the like. Likewise for a QC Role or a WA Role.

Each individual user role will be correlated to a number of training modules, which are necessary and possibly mandatory as illustrated in column 220 of Fig. 3. In other words, a laboratory user assigned to one particular laboratory user role must complete those training modules associated with that particular laboratory user role before he/she may access the laboratory product in the laboratory.

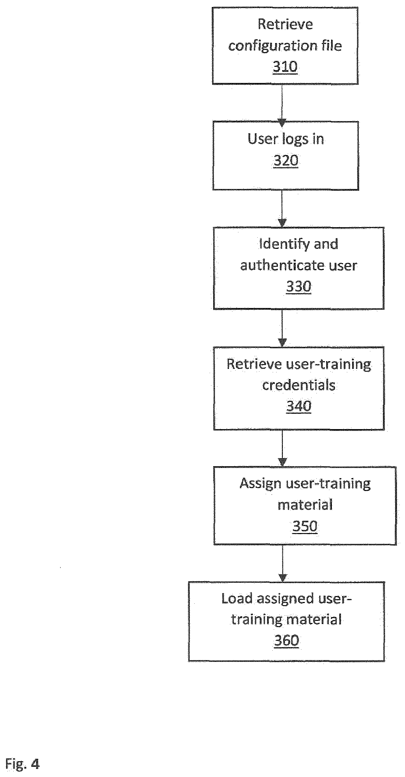

Turning to Fig. 4, Fig. 4 illustrates a flowchart of the method of automatically customizing laboratory user training. In a first step, 310, the customer configuration file is retrieved from the database 120 after being installed in the database 120 by the laboratory provider representative. The customer configuration files may be installed in the database 120 by the laboratory provider representative before delivery to the laboratory or may be installed at the customer site. In step 320, a laboratory user logs into the laboratory system 100 via a display 160 and user input 170 of the training instrument 150 of the laboratory system 100. The laboratory user, in step 330, can then be identified and authenticated by the laboratory system 100 by checking the credentials of the laboratory user stored in the database 120. If the laboratory user is not identified and/or authenticated, the laboratory user may not gain access to the laboratory system 100.

After the laboratory user is identified and/or authenticated, the laboratory system determines the correct user profile for that particular laboratory user (and, along with the user profile, what laboratory roles have been assigned to the laboratory user). Then, in step 340, the modalities, i.e., the user-training credentials that have been configured for that laboratory are retrieved from the database 120. The laboratory system 100 also determines the configuration associated for each of those modalities. With these inputs, the training modules for which this particular laboratory user is required to take (based on the User Profile and the Laboratory Customer Configuration) can be assigned to the laboratory user, in step 350. Finally, in step 360, the assigned user-training material are loaded and displayed to the laboratory user on training instrument 150 of the laboratory system 100. The laboratory user, at this point, may begin the customer training that has been automatically derived for that particular laboratory user based on the role of the laboratory user in the laboratory as well as the particular configuration of that laboratory.

In the case a customer changes tasks associated with a user role within the laboratory, a new feature is implemented in the laboratory, or the configuration of the laboratory is changed, the required training updates will pop up and shown on a display to alert the laboratory user that new training is required for that laboratory user. Access to the laboratory system may be denied until the laboratory user completes all of the new training credentials.

If the customer training is deemed essential and/or mandatory based on the user profile and laboratory configuration for that laboratory user in that laboratory, the laboratory user will not be given full and/or any access to the laboratory system until all of the essential and/or mandatory customer trainings have been completed.

In another embodiment, the laboratory system can also keep track and learn how other laboratory users with the same or similar user roles are performing in the same laboratory (or in another laboratory with the same or similar laboratory configuration) in order to demonstrate and/or predict how a new laboratory user may perform in that particular laboratory configuration. This prediction of performance may be another input into customizing the customer user materials presented to a new laboratory user of the laboratory system.

Further disclosed and proposed is a computer program product including computer-executable instructions for performing the disclosed method in one or more of the embodiments enclosed herein when the program is executed on a computer or computer network. Specifically, the computer program may be stored on a computer-readable data carrier or a server computer. Thus, specifically, one, more than one or even all of method steps as indicated above may be performed by using a computer or a computer network, preferably by using a computer program.

As used herein, a computer program product refers to the program as a tradable product. The product may generally exist in any format, such as in a paper format, or on a computer-readable data carrier on premise or located at a remote location. Specifically, the computer program product may be distributed over a data network (such as a cloud environment). Furthermore, not only the computer program product, but also the execution hardware may be located on premise or in a cloud environment.

Further disclosed and proposed is a computer-readable medium comprising instructions which, when executed by a computer system, cause a laboratory system to perform the method according to one or more of the embodiments disclosed herein.

Further disclosed and proposed is a modulated data signal comprising instructions, which, when executed by a computer system, cause a laboratory system to perform the method according to one or more of the embodiments disclosed herein.

Referring to the computer-implemented aspects of the disclosed method, one or more of the method steps or even all of the method steps of the method according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work, such as providing the samples and/or certain aspects of performing the actual measurements.

It is noted that terms like "preferably," "commonly," and "typically" are not utilized herein to limit the scope of the claimed embodiments or to imply that certain features are critical, essential, or even important to the structure or function of the claimed embodiments. Rather, these terms are merely intended to highlight alternative or additional features that may or may not be utilized in a particular embodiment of the present disclosure.

Having described the present disclosure in detail and by reference to specific embodiments thereof, it will be apparent that modifications and variations are possible without departing from the scope of the disclosure defined in the appended claims. More specifically, although some aspects of the present disclosure are identified herein as preferred or particularly advantageous, it is contemplated that the present disclosure is not necessarily limited to these preferred aspects of the disclosure.

## Claims

1. A method of automatically customizing user training on a laboratory system 100, the method comprising:
retrieving a configuration file of the laboratory system 100;
logging into the laboratory system 100 by a laboratory user;
identifying and authenticating the laboratory user for use and training on the laboratory system 100;
after the laboratory user is identified and authenticated by the laboratory system 100, retrieving training credentials required for that laboratory user for the laboratory system 100 based on a user profile of the laboratory user; and
based on the training credentials of the laboratory user, automatically assigning training material required for the laboratory user to use the laboratory system 100 based on the training credentials of the laboratory user and the configuration file of the laboratory system 100 and loading the assigned training material onto the laboratory system 100 for completion by the laboratory user.

2. The method according to claim 1, wherein the assigning of the user training is determined by first filtering all of training material based on training credentials of the laboratory user for that particular configuration of the laboratory and, after the first filtering, performing a second filtering based on the laboratory role of the laboratory user as found in the user profile.

3. The method according to claims 1 or 2, wherein a laboratory user has a plurality of profiles comprising at least one role within each profile of the plurality of profiles.

4. The method according to any of the preceding claims, wherein the configuration file is comprised of a Masterfile of the laboratory system and a provider's configuration file developed by the laboratory system's provider and of which is correlated to the Masterfile.

5. The method according to claim 4, wherein the configuration file comprises all of the modalities that have been configured for the laboratory system 100.

6. The method according to claim 4, wherein the configuration file comprises all of the modalities available for use by the user.

7. The method according to any of the preceding claims, wherein the assigned training material presented to the laboratory user is based on behavior of similar laboratory users within the laboratory system 100.

8. The method according to any of the preceding claims, wherein the assigned training material presented to the laboratory user is based on behavior of similar users in laboratory system 100, which have the same laboratory configuration or a similar laboratory configuration.

9. The method according to any of the preceding claims, wherein the training credentials are related to user role of the laboratory user in the laboratory system 100.

10. The method according to any of the preceding claims, wherein the user role is correlated to a plurality of training materials associated with the training credentials.

11. The method according to any of the preceding claims, wherein the training credentials are related to laboratory tasks to be performed by the laboratory user in the laboratory system 100.

12. The method according to any of the preceding claims, further comprising, predefining customized training displays based on the user profile and user role in the laboratory system 100.

13. The method according to any of the preceding claims, further comprising, feeding the laboratory system 100 with laboratory system configuration files from a provider of the laboratory system 100.

14. The method according to any of the preceding claims, further comprising,
restricting access to the laboratory system 100 until all user assigned training material has been completed by the laboratory user.

15. The method according to any of the preceding claims, further comprising,
notifying the laboratory user when new training material has been updated and that the laboratory user needs complete the new updated training material.
